**Europäisches Patentamt**

**European Patent Office**

**Office européen des brevets**

(19)

(11) **EP 1 286 311 A1**

(12) **EUROPÄISCHE PATENTANMELDUNG**

(43) Veröffentlichungstag:
   26.02.2003 Patentblatt 2003/09

(51) Int Cl.⁷: **G07B 15/02**

(21) Anmeldenummer: 01119905.6

(22) Anmeldetag: 17.08.2001

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(71) Anmelder: **Siemens Transit Telematic Systems
   AG**
   **9552 Bronschhofen (CH)**

(72) Erfinder:
   • **Wenger, Bruno
     8804 Au (CH)**
   • **Bächtiger, Rolf
     8966 Oberwil-Lieli (CH)**

(74) Vertreter: **Fischer, Michael, Dr.
   Siemens AG,
   Postfach 22 16 34
   80506 München (DE)**

(54) **Verfahren und Schaltungsanordnung zur Wecktelegramm-Erkennung und -Selektion**

(57) Für die Erfassung einer bezogenen Leistung werden elektronische Billette (10) aus einem Schlafzustand mit einem Wecktelegramm (WTEL) geweckt. Um den Energiebedarf weiter zu senken bzw. die Autonomie dieser Billette (10) zu erhöhen, wird eine Wecktelegramm-Erkennung und -Selektion vorgeschlagen, bei der zunächst in einem Empfänger (11) Wecktelegramme (WTEL) detektiert und anschliessend, wenn eine in einem detektierten Wecktelegramm (WTEL) enthaltene Information (H-Control, Header) für das betreffende Billett (10) bestimmt ist, wird zur weiteren Verarbeitung dieses Wecktelegramms (WTEL) ein Prozessormoduls (13) mittels eines Schalters (18) aktiviert. In einer bevorzugten Ausführungsform ist die Aktivierung mehrstufig, in dem zwischen Empfänger (11) und Prozessormodul (13) ein digitales Filter (12) angeordnet ist, das ebenfalls durch einen Schalter (17) aktiviert werden kann. Vom digitalen Filter (17) ist der Schalter (18) für die Aktivierung der Prozessmoduls (13) betätigbar.

Fig. 1

**Beschreibung**

Die vorliegende Erfindung betrifft ein Verfahren und eine Schaltungsanordnung zur Wecktelegramm-Erkennung und -Selektion nach dem Oberbegriff des Patentanspruchs 1 bzw. 11.

Die vorliegende Erfindung befasst sich mit der Registrierung von Objekten in einem begrenzten Raum zur Feststellung einer bezogenen Leistung, das auch als "electronic ticketing" oder auch als "Fahrgeldmanagement" bezeichnet wird.

In der Schrift WO 01/03057 A1 ist ein Verfahren zur Detektion von Objekten mittels einem Transponder offenbart, bei dem vorzugsweise im Frequenzbereich 127 kHz beim Eintritt in eine Erfassungszone eine erste Informationseinheit an den Transponder übermittelt wird und dieser somit geweckt wird. Aufgrund der in der ersten Informationseinheiten enthaltenen Information wird ein auf dem Transponder vorhandenes Sendemodul unmittelbar oder verzögert aktiviert, um eine zweite Informationseinheit an eine in der Erfassungszone befindliche Empfangseinheit wenigstens einmal zu übermitteln.

Das in der Schrift WO 01/20557 A1 offenbarte Verfahren und ein System zur Registrierung von Billetten unterscheidet sich dadurch, dass ein auf dem Billett vorhandenes Empfangsmodul aus einem Schlafzustand mit einer ersten Informationseinheit "geweckt" und periodisch aktiv geschaltet wird. Von einer der Erfassungszone zugeordneten Sende-/Empfangseinheit wird über weitere Informationseinheiten eine bidirektionale Kommunikation aufgebaut und die jeweilige Anwesenheit eines Billettes als Billettrecord registriert.

Das in der Schrift EP 1 104 919 A1 erwähnte "protocole de détection de la présence d'individus ou d'objets dans un espace délimité" beruht ebenfalls auf dem Wecken eines Billettes beim Eintritt in eine Erfassungszone. Die Feststellung der Anwesenheit wird anschliessend durch eine Distanzmessung vorgenommen.

Der vorgenannten Systemen ist gemeinsam, das mit dem Wecken und einer periodischen Aktivierung entweder des auf dem Billett vorhandenen Sendemoduls oder Empfangsmoduls gegenüber einer permanenten Aktivierung der Energieverbrauch zwar sehr deutlich reduziert ist, jedoch in vielen Fällen das Billett geweckt wird, ohne dass eine nachträgliche Registrierung erfolgen darf, wie dies beim blossen Aufenthalt auf einem Bahnhof der Fall ist.

In der Schrift DE 199 52 840 A1 "Datenübertragung für zeitweise inaktive Empfänger" ist ein Verfahren und ein Empfänger angegeben, bei dem ein Empfänger die Inhalte eines empfangenen Telegramms analysiert und dadurch zeitweise inaktiv geschaltet wird. Diese Lösung bedingt zu Beginn des Verfahrens, dass der Empfänger dauernd eingeschaltet ist.

Der vorliegenden Erfindung liegt daher die Aufgabe zugrunde, ein Verfahren und eine Schaltungsanordnung für ein elektronisches Billett anzugeben, bei dem der Energieverbrauch durch intermittierenden Betrieb weiter reduziert und dadurch die Autonomie erhöht werden kann und bei dem zusätzlich eine gezielte Adressierung von einzelnen Billetten möglich ist und Telegramme von den Billetten selektiv empfangbar sind.

Diese Aufgabe wird durch die im Patentanspruch 1 bzw. X angegebenen Massnahmen gelöst. Vorteilhafte Ausgestaltungen der Erfindung sind in weiteren Ansprüchen angegeben.

Durch die Verfahrensschritte :

A im Empfänger werden Wecktelegramme detektiert,
B wenn eine in einem detektierten Wecktelegramm enthaltene Information für das betreffende Billett bestimmt ist, wird zur weiteren Verarbeitung dieses Wecktelegramms das Prozessormoduls aktiviert;

kann die Aktivierung des Prozessormoduls auf jene Fälle beschränkt werden, in denen ein Telegramm das betreffende Billett tatsächlich erreichen muss und dadurch wird der Energiebedarf des Billettes minimiert.

So können sich die folgenden Vorteile zusätzlich ergeben:

i) Dadurch dass
im Wecktelegramm eine Informationseinheit enthalten ist, deren Inhalt festlegt, ob das betreffende Wecktelegramm für jedes Billett bestimmt ist;
können bedarfsweise alle Billette mit einem globalen Wecktelegramm erreicht werden (Patentanspruch 3).

ii) Dadurch dass
im Verfahrensschritt B für die Feststellung, ob das betreffende Wecktelegramm für ein Billett bestimmt ist, davon abhängig gemacht wird, ob ein bestimmter Pegel des empfangenen Wecktelegramms über- oder unterschritten ist;
können Billette in einem Nahbereich ein Wecktelegramm empfangen, ohne dass das Prozessormodul von ebenfalls im Empfangsbereich nicht aber im Nahbereich befindlichen Billetten aktiviert wird. Dies ist insbesondere vorteilhaft, um eine bestimmte Informationen, z.B. die Anzahl Passagiere, von einem Billettautomaten auf ein Billett zu übertragen (Patentanspruch 4).

iii) Dadurch dass

nur die als gültig detektierten Wecktelegramme einem digitalen Filter zugeführt werden, wobei das digitale Filter vorgängig durch einen vom Demodulator betätigbaren Schalter aktiviert wird; ergibt sich eine weitere Reduktion des Energiebedarfes (Patentanspruch 5).

iv) Dadurch dass

wenigstens eine Informationseinheit des als gültig detektierten Wecktelegramms durch wenigstens einen zyklischen Code gesichert ist und dass die Wecktelegramme im digitalen Filter mit dem zyklischen Code geprüft werden und dass jene Wecktelegramme, die der Prüfung nicht genügen, verworfen werden; kann eine Sicherung der Wecktelegramme ohne Aktivierung des Prozessormoduls vorgenommen werden. (Patentanspruch 6).

v) Dadurch dass

vom Prozessormodul die im ersten und/oder zweiten Speicher enthaltenen Informationen geändert werden können, ergibt sich eine dynamisch steuerbare und/oder konfigurierbare Wecktelegramm-Selektion. (Patentanspruch 8).

Unter dem in dieser Schrift verwendeten Begriff elektronisches Billett bzw. kurz Billett ist auch der Begriff Transponder subsummiert.

Die Erfindung wird nachfolgend anhand der Zeichnung beispielsweise näher erläutert. Dabei zeigt:

Figur 1    Blockschaltbild der für die Wecktelegramm-Erkennung und -Selektion vorgesehenen Schaltungsanordnung;
Figur 2    Vereinfachte Darstellung des Signalpegels zur Erkennung von Proximity-Telegrammen.

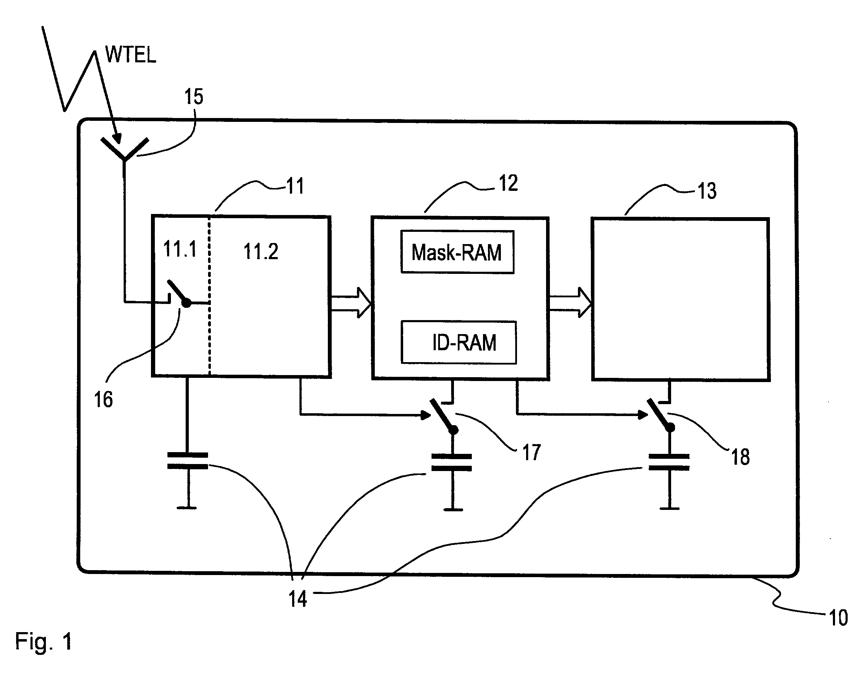

Figur 1 zeigt ein elektronisches Billett 10 mit einer Schaltungsanordnung zur Wecktelegramm-Erkennung und Wecktelegramm-Selektion. Solche Wecktelegramme WTEL werden auf einer Frequenz ausgesandt, bei der das elektromagnetische Feld primär als Nahfeld ausgebildet ist, ein dazu möglicher Frequenzbereich liegt beispielsweise bei 7.68 MHz. In der Figur 1 nicht dargestellt sind die übrigen Schaltungsteile eines Billettes, die insbesondere für eine bidirektionale Kommunikation z.B. auf dem Frequenzbereich 868 MHz vorgesehen sind. Das Billett 10 enthält als Komponenten der Schaltungsanordnung einen Analog-Empfänger 11, ein digitales Filter 12 und ein eine Intelligenz enthaltendes Prozessormodul 13. Das digitales Filter 12 und das Prozessormodul 13 werden von wenigstens einer Energiequelle 14 selektiv versorgt. Selektiv bedeutet hier, dass mit den Schaltern 17 und 18 die vorgenannten zwei Einheiten 12 und 13 nur dann mit Energie versorgt werden, wenn dies aufgrund des empfangenen Wecktelegramms WTEL erforderlich ist. Zum Verständnis der Wirkungsweise der erfindungsgemässen Schaltungsanordnung wird zunächst der Aufbau eines Wecktelegramms WTEL anhand der Tabellen 1, 2 und 3 erläutert.

Tabelle 1

| Wecktelegramm WTEL | | | | | | |
|------|-----------|----------|--------|------|------|------|
| SOF | H-Control | D-Length | Select | CRC8 | Data | CRC16 | EOF |

Tabelle 1 zeigt den Aufbau eines Wecktelegramms WTEL, das eine bestimmte Anzahl von Bits aufweist. Der Beginn ist mit SOF (Start of frame) bezeichnet. Nachfolgend ist eine Informationseinheit H-Control (H : Header) enthalten, deren Aufbau der Tabelle 2 zu entnehmen ist, wobei die dargestellte Grösse der einzelnen Records nicht mit der tatsächlichen Grösse in Bits oder Bytes korrespondiert. Anstelle von Informationseinheit spricht der Fachmann auch von Record oder von Feld, wobei diese Begriffe auch rekursiv verwendet werden können, das bedeutet, dass ein Record weitere Records enthalten kann. Die Informationseinheit D-Length von z.B. 8 Bit Länge spezifiziert die Länge der eigentlichen Nutzinformation, die im Wecktelegramm WTEL die Bezeichnung Data trägt. Zur Sicherung der Records SOF, H-Control, D-Length und Select ist mit CRC8 ein Cyclic Redundancy Check 8 vorgesehen, der z.B. erzeugt wird mit dem Generator-Polynom

$$1 + x^2 + x^3 + x^4 + x^8.$$

Zur Sicherung des Inhaltes der in der Informationseinheit Data übertragenen Informationen ist am Schluss des Wecktelegramms WTEL ein CRC16 Cyclic Redundancy Check 16 vorgesehen, der erzeugt wird z.B. mit dem Generator-Polynom

$$1 + x^5 + x^{12} + x^{16}.$$

Das Ende des Wecktelegramms WTEL wird mit dem Feld EOF (End of Frame) markiert und kann ein Bitmuster einer bestimmten Länge und allenfalls bestimmten Bedingungen über die einzelnen Bits enthalten, z.B. Quersumme mod 2 gleich Null.

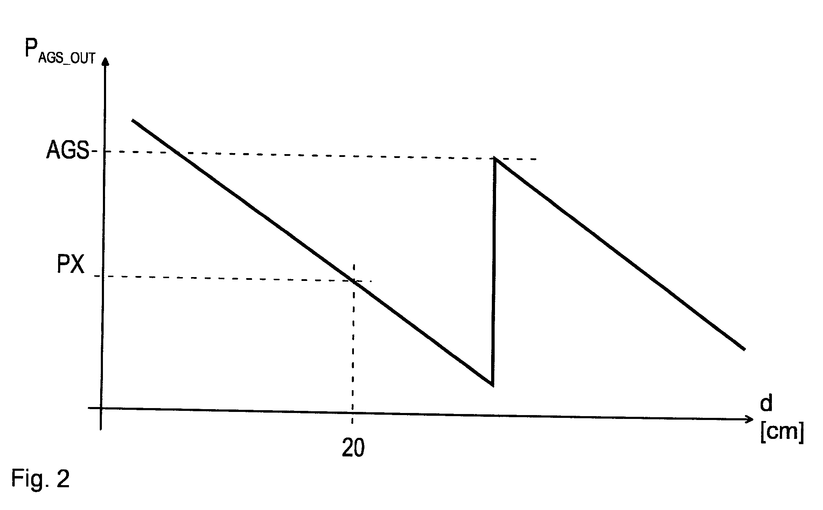

In der Tabelle 2 sind beispielhaft einzelne Felder bzw. Records dargestellt, die einerseits den Typ des Wecktelegramms WTEL und andererseits dessen generelle "Behandlung" durch das empfangende Billett spezifizieren. Die Felder sind alle gleich gross dargestellt, jedoch in der Praxis verschieden gross bezüglich der Anzahl Bits. Unter bestimmten Voraussetzungen bzw. für bestimmte Anwendungen kann es erforderlich sein, dass die im Bereich einer Sende-/Empfangseinrichtung befindlichen Billette 10 auf jeden Fall ein Wecktelegramm WTEL empfangen und bearbeiten müssen. Damit dies möglich wird, ist im Record H-Control ein Flag FA vorgesehen, das die Information für einen solchen Zwangsempfang enthält. In einem weiteren Flag, Flag FB gemäss der Darstellung in Tabelle 2, kann der Typ des Telegramms bzw. der Ursprung des Telegramms spezifiziert werden, hier bedeutet ein Proximity-Telegramm, dass dieses von einer Sendeeinrichtung entstammt, die über eine Reichweite bis ca. 20 cm aufweist. Die Bedeutung dieses Flags wird weiter unten zur Figur 2 erläutert. Für eine weitere Spezifikation zur Behandlung der Wecktelegramme WTEL können weitere Flags FC, FD und FE vorgesehen sein, wobei diese Aufzählung nicht abschliessend zu verstehen ist.

Tabelle 2

| Informationseinheit H-Control | |
|---|---|
| **Informationsfeld** | **Bedeutung** |
| H2 | Bit 2 der Länge von H-Control |
| H1 | Bit 1 der Länge von H-Control |
| H0 | Bit 0 der Länge von H-Control |
| FA | Flag A Zwangsempfang: "Force Receive" oder "receive All" |
| FB | Flag B Telegramm vom Typ Proximity |
| FC | Flag C |
| FD | Flag D |
| FE | Flag E |

Die in Tabelle 3 dargestellte Informationseinheit Data enthält die Anwendungsdaten, hier im vorliegenden Ausführungsbeispiel sind dies die Daten, die zur Erfassung der Anwesenheit eines elektronischen Billettes in einer Erfassungszone, z.B. in einem Eisenbahnwagen, notwendig sind.

Tabelle 3

| Informationseinheit Data | |
|---|---|
| **Informationsfeld** | **Bedeutung** |
| ADDRESS1 | Adresse der Sende-/Empfangseinheit |
| CYCLE1 | Zeiteinheit, Zeitbezug; Zykluszeit |
| COMMAND1 | Befehle an das Billett 10 |
| POSITION1 | Ort, Einsteigeort |
| COURSE1 | Kurs- und/oder Wagennummer |
| DATETIME1 | Datum und Uhrzeit |
| TYPE1 | Art des Verkehrsmittels |

Das Feld CYCLE1 ist in dieser Ausführungsform für eine intermittierende bidirektionale Kommunikation auf dem Frequenzbereich von 868 MHz zwischen einem Billett 10 und einer Sende-/Empfangseinheit in der Erfassungszone vorgesehen. Es enthält insbesondere die Informationen für den intermittierenden Betrieb, der notwendig ist, um den Energieverbrauch zu minimieren. Diese intermittierende bidirektionale Kommunikation kann nach dem Erhalt eines Wecktelegramms WTEL aufgenommen werden und ist die Basis für die Feststellung einer definierten Anwesenheit eines Billettes 10 in einer Erfassungszone.

Nach der Erläuterung der Struktur der Wecktelegramme WTEL wird das erfindungsgemässe Verfahren anhand der Wirkungsweise der in Figur 1 dargestellten Schaltungsanordnung erläutert.

Wird von der Antenne dem Pegeldetektor 11.1 ein Signal der festgelegten Frequenz, z.B. 6.78 MHz, zugeführt, erfolgt durch einen ersten (elektronischen) Schalter 16 eine Verbindung mit dem Demodulator 11.2. Ein Wecktelegramm WTEL wird zweckmässigerweise nach dem Verfahren OOK (On Off Keying) moduliert, im Demodulator 11.2 sind daher die vorstehend genannten Felder SOF und EOF verfügbar. Dadurch entfällt eine Rahmensynchronisation und es können sogenannt repetitive Telegramme auf diese Weise lückenlos übertragen werden.

Das vorgenannte Modulationsverfahren OOK ist lediglich ein Beispiel, es können auch noch andere Modulationsverfahren wie z.B. ASK (Amplitude Shift Keying) eingesetzt werden.

Wird nun vom Demodulator 11.2 ein gemäss dem Modulationsverfahren OOK gültiges Wecktelegramm WTEL detektiert, wird mit einem zweiten (elektronischen) Schalter 17 ein digitales Filter 12 aktiv geschaltet und das demodulierte Wecktelegramm WTEL dem Filter 12 zugeführt.

Im digitalen Filter 12 werden die vorgenannte CRC8-Sicherung und anschliessend die CRC16-Sicherung geprüft, wobei das Feld nur dann geprüft wird, wenn die CRC8-Sicherung ein negatives Resultat liefert, d.h. der übertragene Header wird als in Ordnung befunden, und wenn für die CRC16-Sicherung in D-Length eine Länge grösser Null angegeben ist. Wenn eine der vorgenanten Prüfungen CRC8 oder CRC16 ein positives Resultat liefert, wird das im Filter 12 empfangene Wecktelegramm WTEL verworfen. Dabei kann sich das digitale Filter unmittelbar oder nach einer gewissen Latenzzeit in den ausgeschalteten Zustand überführen. Für die weitere Analyse eines empfangenen Wecktelegramms WTEL im Filter 12 sind in dieser Ausführungsform vier parallel arbeitenden Suchschaltungen vorgesehen (nicht dargestellt in Fig. 1). Jede Suchschaltung besteht aus einem Mask-RAM, das anzeigt bzw. maskiert, welche Bits bzw. Felder verglichen werden sollen und einem ID-RAM (ID: Identität), das anzeigt, welche Werte an diesen Bits bzw. Feldern erwartet werden. Die Ergebnisse aus der Analyse der vorgenannten Suchschaltungen werden einer Decoder-Logik zugeführt. Diese Decoder-Logik enthält die Information, bei welchen Kombinationen der vorgenannten Ergebnissen ein Wecktelegramm WTEL dem Prozessormodul 16 nicht zugeführt werden soll. Die Aktivierung des Prozessormoduls 13 erfolgt mit einem dritten von der Decoder-Logik betätigbaren (elektronischen) Schalter 18. Die Decoder-Schaltung enthält insbesondere auch die Information, dass z.B. bei einem gesetzten Flag FA das entsprechende Wecktelegramm WTEL auf jeden Fall dem Prozessormodul 13 zuzuführen ist. Eine weitere Funktion des digitalen Filters 12 wird nun anhand der Figur 2 erläutert: Damit im Empfänger 11 bei gleicher Sendeleistung einer im Erfassungszone befindlichen Sende-/Empfangseinheit eine Reichweite von 0,1 cm bis etwa 300 cm möglich ist, muss im Empfänger 11 die Empfängerempfindlichkeit umschaltbar sein. Diese Umschaltung erfolgt mit einer im Empfänger 11 enthaltenen zweistufigen AGS-Schaltung (AGS: Automatic Gain Switch), d.h. die Verstärkung ist abhängig vom Eingangspegel des Wecktelegramms WTEL, so dass zwei verschiedene Verstärkungen resultieren. In der Figur 2 ist auf der Ordinate der Pegel $P_{AGS\_OUT}$ am Ausgang der AGS-Schaltung in Abhängigkeit von der Distanz d eines Billettes 10 von einer Sende-/Empfangseinheit dargestellt. Mit $P_{AGS}$ ist die Umschaltschwelle der AGS-Schaltung angegeben. In bestimmten Anwendungen ist es erforderlich, dass mit einem Wecktelegramm WTEL nur Billette 10 adressiert werden können, die sich nur in der nächsten Umgebung liegen. Diese nächste Umgebung wird hier Proximity-Range genannt und umfasst einen Bereich von 0,2 cm bis etwa 20 cm. Eine solche Anwendung ist beispielsweise dann gegeben, wenn an einer von einem Passagier zu bedienenden Sende-Empfangseinheit eine bestimmte Information auf ein Billett 10 übertragen werden soll, beispielsweise die Anzahl Passagiere oder eine Inaktivierung der Billette 10, die den im Moment nicht mitreisenden Kindern eines Vaters zugeordnet sind. Es muss sichergestellt sein, dass speziell in einem Gedränge die Billette 10 der anderen Reisenden dadurch nicht adressiert werden. Dem Filter 12 wird neben dem Wecktelegramm WTEL die Information zugeführt, ob sich die AGS-Schaltung auf der Stufe der kleineren Verstärkung befindet und ob der in Figur 2 angegebene Pegel PX überschritten ist.

Die vorstehend genannte Decoder-Logik kann mehrstufig ausgeführt sein, in dem zunächst mehrere bestimmte Records oder Bits des Wecktelegramms WTEL parallel analysiert werden und das Ergebnis dieser ersten Decoder-Logikschaltungen ein zweiten Decoder-Logikschaltung zugeführt wird, in der dann ein Signal erzeugt, das zur Betätigung des dritten Schalters 18 benutzt wird.

Im Prozessormodul 13 werden die für das betreffende Billett bestimmten Wecktelegramme WTEL gespeichert und hinsichtlich einer nachfolgenden bidirektionalen Kommunikation auf den Frequenzen 863 MHz und 868 MHz ausgewertet.

In einer besonderen Ausführungsform der vorliegenden Erfindung kann vom Prozessormodul 13 aufgrund einer im Wecktelegram WTEL oder aufgrund einer in der bidirektionalen Kommunikation empfangenen Information das digitale Filter 12 konfiguriert werden. Das bedeutet, dass die Inhalte des ersten Speichers Mask-RAM und/oder des zweiten Speichers ID-RAM vom Prozessormodul 13 verändert werden können, um nachfolgend eine bestimmte neue oder geänderte Selektion von Wecktelegrammen WTEL erlangen zu können. Bevorzugt wird für eine Neukonfigurierung des digitalen Filters 12 ein Wecktelegramm WTEL benutzt, bei dem das erwähnte Flag FA gesetzt ist und bei dem zusätzlich ein Flag FC (C = Configuration) gesetzt ist, die in den ersten Speicher Mask-RAM und/oder in den zweiten Speicher ID-RAM einzuschreibenden Daten können im Feld Data enthalten sein. Der Fachmann spricht in einem solchen Fall von einem Variant-Record.

Die in den vorstehenden Ausführungsformen angegebenen Verfahrensschritte zur Sicherung und Selektion der Wecktelegramme WTEL sind unabhängig voneinander und demzufolge frei kombinierbar.

Das erfindungsgemässe Verfahren zur Erkennung und Selektion von Telegrammen kann auch in anderen Anwendungen eingesetzt werden, beispielsweise zu einer Ueberlastabwehr, um für die Zuführung von Meldungen zu einem Prozessorsystem gezielte und dynamisch steuerbare Selektion vornehmen zu können.

**Liste der verwendeten Bezugszeichen und Abkürzungen**

10  Elektronisches Billett
11  Empfänger, Analogempfänger
11.1  Pegeldetektor, "Schnüffler"
11.2  Demodulator und Decoder
12  Digitales Filter
13  Prozessormodul
14  Energiequelle
15  Antenne
16  erster Schalter
17  zweiter Schalter, betätigbar durch Demodulator und Decoder
18  dritter Schalter, betätigbar durch digitales Filter

AGS  Automatic Gain Control
ASK  Amplitude Shift Keying
CRC  Cyclic Redundancy Check
EOF  Ende eines Telegramms, end of frame
OOK  On Off Keying, Modulationsverfahren
SOF  Beginn eines Telegramms, start of frame

**Patentansprüche**

1. Verfahren zur Wecktelegramm-Erkennung und -Selektion für ein elektronisches Billett (10), welches einen mit einer Antenne (15) verbundenen Empfänger (11) und ein Prozessormodul (13) umfasst, wobei dem Empfänger (11) Wecktelegramme (WTEL) übermittelbar sind,

   **gekennzeichnet durch** die Verfahrensschritte,

   A im Empfänger (11) werden Wecktelegramme (WTEL) detektiert,
   B wenn eine in einem detektierten Wecktelegramm (WTEL) enthaltene Information (H-Control, Header) für das betreffende Billett (10) bestimmt ist, wird zur weiteren Verarbeitung dieses Wecktelegramms (WTEL) das Prozessormodul (13) aktiviert.

2. Verfahren nach Anspruch 1,
   **dadurch gekennzeichnet, dass**
   die Wecktelegramme (WTEL) nach einem vereinbarten Verfahren (OOK, ASK) moduliert sind und der Empfänger (11) in einen Pegeldetektor (11.1) und einen Demodulator (11.2) gegliedert ist, dass der Demodulator (11.2) aufgrund detektierter Wecktelegramme (WTEL) mit einem Schalter (16) aktiviert wird und dass im Verfahrensschritt A durch den Demodulator (11.2) die detektierten Wecktelegramme (WTEL) auf ihre Gültigkeit hinsichtlich des angewendeten Modulationsverfahrens (OOK, ASK) geprüft werden.

3. Verfahren nach Anspruch 1 oder 2,
   **dadurch gekennzeichnet, dass**
   im Wecktelegramm (WTEL) eine Informationseinheit (FA) enthalten ist, deren Inhalt festlegt, ob das betreffende Wecktelegramm (WTEL) für jedes Billett (10) bestimmt ist.

**4.** Verfahren nach einem der Ansprüche 1 bis 3,
**dadurch gekennzeichnet, dass**
im Verfahrensschritt B für die Feststellung, ob das betreffende Wecktelegramm (WTEL) für ein Billett (10) bestimmt ist, davon abhängig gemacht wird, ob ein bestimmter Pegel (AGS, PX) des empfangenen Wecktelegramms (WTEL) über- oder unterschritten ist.

**5.** Verfahren nach einem der Ansprüche 2 bis 4,
**dadurch gekennzeichnet, dass**
nur die als gültig detektierten Wecktelegramme (WTEL) einem digitalen Filter (12) zugeführt werden, wobei das digitale Filter (12) vorgängig durch einen vom Demodulator (11.2) betätigbaren Schalter (17) aktiviert wird.

**6.** Verfahren nach Anspruch 5
**dadurch gekennzeichnet, dass**
wenigstens eine Informationseinheit (H-Control, D-Length, Select, Data) des als gültig detektierten Wecktelegrammes (WTEL) durch wenigstens einen zyklischen Code (CRC8, CRC16) gesichert ist und dass die Wecktelegramme (WTEL) im digitalen Filter (12) mit dem zyklischen Code geprüft werden und dass jene Wecktelegramme (WTEL), die der Prüfung nicht genügen, verworfen werden.

**7.** Verfahren nach Anspruch 5 oder 6,
**dadurch gekennzeichnet, dass**
im digitalen Filter (12) die Feststellung, ob ein Wecktelegramm (WTEL) für das betreffende Billett (10) bestimmt ist, dadurch erfolgt, dass im Wecktelegramm (WTEL) Teile der einzelnen Informationseinheiten mittels in einem ersten Speicher (Mask-RAM) enthaltenen Informationen maskiert und mit in einem zweiten Speicher (ID-RAM) enthaltenen Information verglichen werden und abhängig vom Ergebnis des Vergleiches eine Aktivierung des Prozessormoduls (13) mittels Betätigung eines dritten Schalters (18) erfolgt.

**8.** Verfahren nach Anspruch 7,
**dadurch gekennzeichnet, dass**
vom Prozessormodul (13) die im ersten und/oder zweiten Speicher (Mask-RAM, ID-RAM) enthaltenen Informationen geändert werden können.

**9.** Verfahren nach Anspruch 8,
**dadurch gekennzeichnet, dass**
das Prozessormodul (13) die Aenderung aufgrund einer im Wecktelegramm (WTEL) enthaltenen Information (FA, FC, Data) vornimmt.

**10.** Verfahren nach einem der Ansprüche 2 bis 9,
**dadurch gekennzeichnet, dass**
die Wecktelegramme (WTEL) nach dem Verfahren On Off Keying (OOK, ASK) moduliert sind und dass Wecktelegramme (WTEL) ohne Rahmensynchronisation lückenlos übertragen werden können.

**11.** Schaltungsanordnung zur Wecktelegramm-Erkennung und -Selektion in einem elektronisches Billett (10), welches einen mit einer Antenne (15) verbundenen Empfänger (11) und ein Prozessormodul (13) umfasst, wobei dem Empfänger (11) Wecktelegramme (WTEL) übermittelbar sind,
**dadurch gekennzeichnet, dass**
im Empfänger (11) Wecktelegramme (WTEL) detektierbar sind, und wenn eine in einem detektierten Wecktelegramm (WTEL) enthaltene Information (H-Control, Header) für das betreffende Billett (10) bestimmt ist, wird zur weiteren Verarbeitung dieses Wecktelegramms (WTEL) das Prozessormoduls (13) mit einem Schalter (18) aktivierbar ist.

**12.** Schaltungsanordnung nach Anspruch 11,
**dadurch gekennzeichnet, dass**
der Empfänger (11) in einen Pegeldetektor (11.1) und einen Demodulator (11.2) gegliedert ist, und der Demodulator (11.2) aufgrund detektierter Wecktelegramme (WTEL) mit einem Schalter (16) aktivierbar ist.

**13.** Schaltungsanordnung nach Anspruch 11 oder 12,
**dadurch gekennzeichnet, dass**
der Empfänger (11) eine zweistufige Verstärkungsschaltung (AGS) enthält, die ein Signal erzeugt, ob ein bestimmter Pegel (AGS, PX) des empfangenen Wecktelegramms (WTEL) überoder unterschritten ist.

14. Schaltungsanordnung nach Anspruch 11 oder 12,
**dadurch gekennzeichnet, dass**
dass zwischen Empfänger (11) und Prozessormodul (13) ein digitales Filter (13) angeordnet ist, dem die als gültig detektierten Wecktelegramme (WTEL) zuführbar sind, wobei das digitale Filter (12) vorgängig durch einen vom Demodulator (11.2) betätigbaren Schalter (17) aktivierbar ist.

15. Schaltungsanordnung nach Anspruch 14,
**dadurch gekennzeichnet, dass**
das digitale Filter (12) einen ersten Speicher (Mask-RAM) enthält zu einer Maskierung von im Wecktelegramm (WTEL) enthaltenen Informationen und einen zweiten Speicher (ID-RAM) zum Vergleich der im maskierten Wecktelegramm (WTEL) enthaltenen Informationen, wobei das Prozessormoduls (13) abhängig vom Ergebnis des Vergleiches durch einen dritten Schalters (18) aktivierbar ist.

16. Schaltungsanordnung nach Anspruch 15,
**dadurch gekennzeichnet, dass**
vom Prozessormodul (13) die im ersten und/oder zweiten Speicher (Mask-RAM, ID-RAM) enthaltenen Informationen veränderbar sind.

Fig. 1

Fig. 2

EP 1 286 311 A1

| | **Europäisches** **EUROPÄISCHER RECHERCHENBERICHT** | | Nummer der Anmeldung |
|---|---|---|---|
| | **Patentamt** | | EP 01 11 9905 |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br><br>A | EP 0 766 215 A (TEXAS INSTRUMENTS INC) 2. April 1997 (1997-04-02) * Zusammenfassung *<br><br>* Seite 2, Zeile 5 - Seite 4, Zeile 34 *<br>* Seite 6, Zeile 40 - Seite 9, Zeile 50 *<br>* Seite 22, Zeile 15 - Seite 23, Zeile 39 *<br>* Seite 28, Zeile 15 - Seite 29, Zeile 17 *<br>* Abbildungen 5,6,19 * | 1-6, 10-14<br>7-9,15, 16 | G07B15/02 |
| D,A | WO 01 20557 A (CRONIMUND CHRISTOPH ;HAENI PROLECTRON AG (CH); REBSAMEN ALDO (CH);) 22. März 2001 (2001-03-22) * Zusammenfassung * * Seite 1, Zeile 1 - Seite 4, Zeile 9 * * Seite 6, Zeile 1 - Zeile 20 * * Seite 7, Zeile 13 - Seite 8, Zeile 28 * * Seite 14, Zeile 9 - Zeile 12 * * Seite 25, Zeile 26 - Seite 26, Zeile 12; Abbildung 9 * | 1-16 | |
| A | EP 1 104 919 A (EM MICROELECTRONIC MARIN SA) 6. Juni 2001 (2001-06-06) * Zusammenfassung * * Spalte 1, Zeile 3 - Spalte 9, Zeile 7 * | 1-16 | **RECHERCHIERTE SACHGEBIETE (Int.Cl.7)**<br><br>G07B<br>G06K<br>G07F |

Der vorliegende Recherchenbericht wurde für alle Patentansprüche erstellt

| Recherchenort | Abschlußdatum der Recherche | Prüfer |
|---|---|---|
| MÜNCHEN | 2. Mai 2002 | Königer, A |

**ANHANG ZUM EUROPÄISCHEN RECHERCHENBERICHT
ÜBER DIE EUROPÄISCHE PATENTANMELDUNG NR.**

EP 01 11 9905

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0766215 | A | 02-04-1997 | EP | 0766215 A1 | 02-04-1997 |
| WO 0120557 | A | 22-03-2001 | WO | 0120557 A1 | 22-03-2001 |
| EP 1104919 | A | 06-06-2001 | EP | 1104919 A1 | 06-06-2001 |
| | | | JP | 2001216545 A | 10-08-2001 |

Für nähere Einzelheiten zu diesem Anhang : siehe Amtsblatt des Europäischen Patentamts, Nr. 12/82